# FASCICULE DE BREVET EUROPEEN

(11) **EP 2 604 013 B1**
(45) Date de publication et mention de la délivrance du brevet: **31.08.2022**
(21) Numéro de dépôt: 11743061.1
(22) Date de dépôt: 09.08.2011
(51) Int. Cl.: H04L 65/10, H04L 65/60

(54) **PROCEDE ET ARCHITECTURE DE SYSTEME D'OUVERTURE DE CANAUX SUR ETABLISSEMENT DE COMMUNICATION VOIP EN MODE CLAIR P BGAN, SWIFTBROADBAND ET FLEETBROADBAND**
VERFAHREN UND ARCHITEKTUR EINES SYSTEMS ZUR ÖFFNUNG VON KANÄLEN BEI DER HERSTELLUNG EINER VOIP-KOMMUNIKATION IM P-BGAN--CLEARMODE, SWIFTBROADBAND UND FLEETBROADBAND
METHOD AND ARCHITECTURE OF SYSTEM FOR OPENING CHANNELS ON ESTABLISHMENT OF VOIP COMMUNICATION IN P BGAN CLEAR MODE, SWIFTBROADBAND AND FLEET BROADBAND

(30) Priorité: 10.08.2010 FR 1003334
(43) Date de publication de la demande: 19.06.2013
(73) Titulaire: THALES, 92400 Courbevoie (FR)
(72) Inventeur: BILLONNEAU, Dominique, F-92700 Colombes (FR); SUARD, Nicolas, F-92230 Gennevilliers (FR)
(74) Mandataire: Marks & Clerk France
(86) Numéro de dépôt international: PCT/EP2011/063664
(87) Numéro de publication internationale: WO 2012/020010

(56) Documents cités:
- EP-A1- 1 758 334
- WO-A1-2008/070959
- WO-A2-2005/034372
- WO-A2-2010/075126
- US-A1- 2003 200 337
- US-A1- 2010 182 947
- US-B1- 7 328 027

## Description

L'invention concerne un procédé et une architecture système permettant d'ouvrir de manière dynamique des canaux de communication de dimensions optimisées à débit garanti d'Inmarsat par exemple. L'architecture est, par exemple, mise en œuvre pour l'ouverture de canaux sur établissement de communication voix sur IP « VoIP » en mode clair BGAN (un service IP et voix délivré simultanément en haut débit à travers le réseau 3 G d'Inmarsat), pour des services connus sous l'acronyme anglo-saxon « SwiftBroadband » et « FleetBroadband » (service de communications maritime d'lnmarsat).

L'architecture système se présente, par exemple, sous la forme d'une plate-forme embarquée qui peut être à bord d'un aéronef, d'un navire, d'un véhicule ou dans une valise, et d'une plate-forme sol qui s'interface avec les réseaux publics ou privés. La plate-forme embarquée sert un réseau utilisant le protocole Internet IP sur lequel sont connectés des équipements informatiques (données, voix ou phonie, vidéo, etc....).

### Définitions

Dans la suite de la description, les abréviations suivantes et leurs définitions seront utilisés :
PDP : protocole de données paquet ou Packet Data Protocol, un contexte PDP vient de la technologie GPRS connue de l'Homme du métier, c'est un ensemble d'informations qui caractérise un service de transmission de base; il regroupe des paramètres qui permettent à un abonné de communiquer avec une adresse PDP bien définie, suivant un profil de Qualité de Service déterminé (délai, priorité, débit, ..)
RTP : protocole temps réel ou Real Time Protocol. Protocole sur IP qui permet d'identifier le type de l'information transportée, d'ajouter des marqueurs, des numéros de séquence et de contrôler l'arrivée à destination des paquets.
TFT : initiales qui désignent une série de filtre qui assure un chemin déterminé pour des applications dont le flux est identifié par les filtres TFT, Traffic Flow Template. Par exemple, la technologie d'Inmarsat utilise des TFT.
VoIP : voix sur IP ou en anglo-saxon Voice over IP
SIP : protocole initialisation de service ou Session Initiation Protocol. Ce protocole est normalisé et standardisé. Il se charge de l'authentification et de la localisation des multiples participants. Il se charge également de la négociation sur tous les types de média utilisables par les différents participants en encapsulant des messages SDP (Session Description Protocol). SIP ne transporte pas les données échangées durant la session comme la voix ou la vidéo. SIP étant indépendant de la transmission des données, tout type de données et de protocoles peut être utilisé pour cet échange. Cependant le protocole RTP assure le plus souvent les sessions audio et vidéo.

Le mot « streaming » désigne une classe de services Satcom garantissant un débit garanti (utilisé principalement pour les applications temps-réel).

Le mot « transceiver » est utilisé pour désigner un transcepteur ayant notamment pour fonction de diffuser un signal d'entrée vers plusieurs sorties.

L'expression « Bord » correspond aux équipements disposés à bord d'un satellite ou d'un aéronef et l'expression « sol » aux équipements situés dans une station sol.

L'expression « route externe » concerne les mécanismes de routage mis en œuvre par la fonction SIP du « redirect Proxy ». Il s'agit de rediriger des appels non trouvés localement vers un autre proxy via la route définie.

L'expression « Inbound call » correspond à un appel entrant en contraste avec l'expression « outbound call » correspondant à un appel sortant.

Dans les réseaux de télécommunication utilisant notamment un satellite, deux types de catégorie de services sont en général proposés :
- un service de type « Best Effort » où l'utilisateur paye au Méga Octet consommé, mais il n'a pas de garantie de Qualité de Service. C'est-à-dire que s'il y a beaucoup d'utilisations simultanées sur le lien satellite, la qualité est fortement dégradée. Pour des services de téléphonie sur IP (Internet Protocol) ou pour de la visioconférence, cela est rédhibitoire.
- un service de type streaming pour lequel l'utilisateur paye à la durée de connexion (prix très élevé), mais qui a, en contrepartie, une garantie de service qui lui permet d'assurer des services temps réels, comme la voix ou la vidéo ou encore une liaison prioritaire de la ressource satellite.

### Mécanisme Bord-Sol

Dans l'état de l'art, l'établissement d'une communication entre une plateforme sol et un système embarqué sur aéronef ou sur satellite nécessitant une qualité de service s'effectue par l'ouverture préalable d'un canal streaming à 32 K ou 64 K ou 128 K ne préjugeant pas du volume réel de la bande utilisée et consommant la ressource dès l'ouverture.

Le canal « streaming » (lecture en flux continu) est ouvert, avec paiement dès l'ouverture, afin de permettre le passage de la signalisation. Si le destinataire de l'appel ne décroche pas, la communication est facturée jusqu'à la libération du canal.

De plus, l'absence de gestion fine des vocodeurs au niveau des équipements de communications et l'absence d'optimisation du cadencement dans la transmission de paquets voix sur IP ne permettent d'effectuer que des communications utilisant en moyenne 80 Kbps (Vocodeur de type G711) de bande passante par communication.

Néanmoins, certaines architectures offrent la possibilité de concaténer plusieurs communications dans un canal de « streaming » préalablement activé sans maîtrise du vocodeur et du cadencement (nombre de trames dans une « payload » ou données acheminées). Ce mécanisme peut s'avérer intéressant si le canal ouvert est toujours occupé par un volume de communications significatif, dans le cas contraire, un canal est ouvert avec un trafic insuffisant et son coût d'exploitation peut être très élevé.

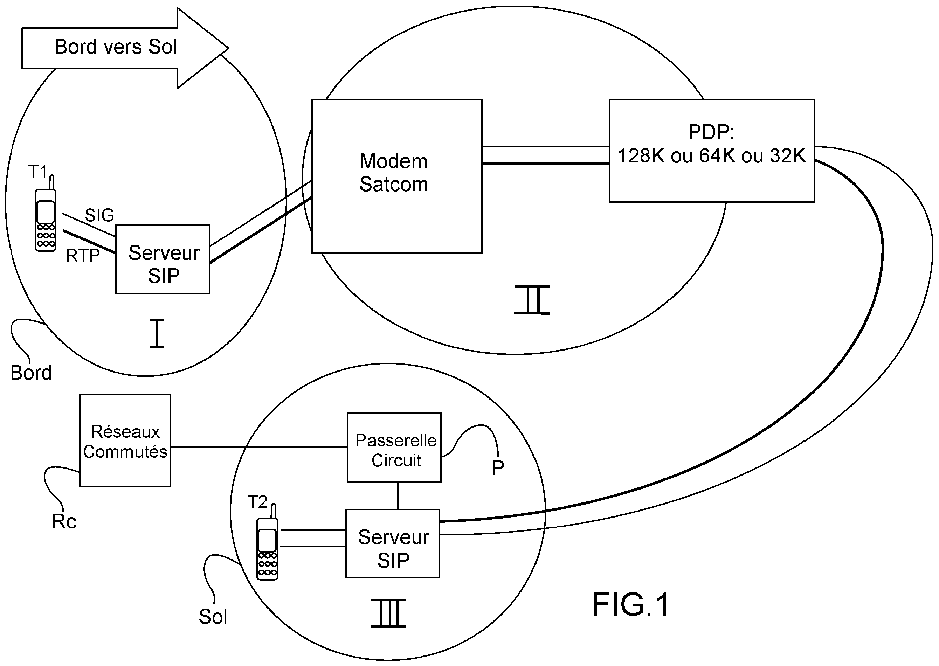

Le mécanisme est illustré en figure 1 où l'on retrouve des échanges de communications émis par un premier terminal T₁ disposé sur aéronef ou satellite ou « Bord » vers le Sol par l'intermédiaire d'un premier serveur SIP situé au niveau du Bord d'un aéronef I, d'une liaison ou module Satcom II transmettant les données en utilisant le protocole PDP, d'un deuxième serveur SIP situé au niveau d'une station sol III en liaison avec un terminal T₂, d'une passerelle circuit P, d'un réseau de téléphonie commuté Rc.

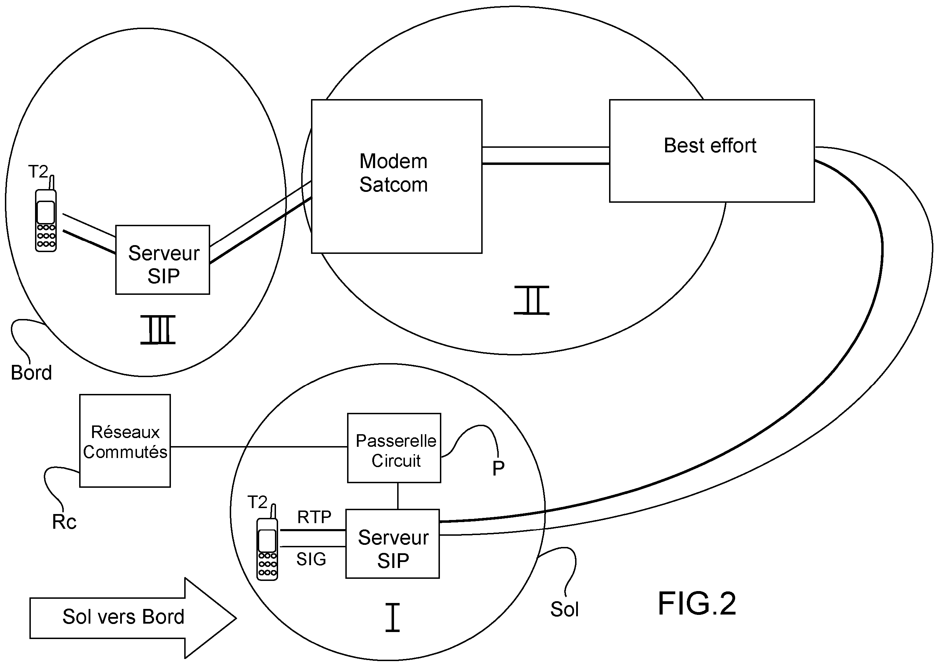

La figure 2 schématise les échanges de données lors d'une communication établie dans le sens inverse à celui décrit à la figure 1, à savoir, du sol vers le bord entre un terminal T₁ et un terminal T₂.

Dans l'état de l'art, une communication établie depuis le sol est systématiquement réalisée dans le Best Effort. Si l'on souhaite depuis le sol une communication de qualité streaming, le canal doit être préalablement ouvert depuis l'avion.

La demande de brevet US 2003/0200337 divulgue un système dans lequel un premier flux d'informations est codé avec un premier format, un deuxième flux d'informations dans un deuxième format, avec un serveur proxy de transcodeur entre les deux.

Le brevet US7328027 décrit un système permettant de choisir le vocodeur à utiliser en fonction d'une charge de données.

La demande de brevet US 2010/182947 divulgue un procédé pour optimiser l'utilisation de ressources spectrales d'un système satellitaire qui consiste à adapter le débit dans un réseau de satellites géostationnaires, en utilisant deux débits de valeurs différentes, avec la possibilité d'adapter la puissance d'émission pour atteindre l'objectif de qualité de signal désiré.

Le document WO 2005/034372 A2 (SANTERA SYSTEMS INC [US]; LI SAN-QI [US] ET AL.) 14 avril 2005 (2005-04-14) est un autre document de l'art antérieur pertinent.

L'objet de l'invention concerne une architecture système selon la revendication indépendante 1.

D'autres caractéristiques et avantages du dispositif selon l'invention apparaîtront mieux à la lecture de la description qui suit d'un exemple de réalisation donné à titre illustratif et nullement limitatif annexé des figures qui représentent :
- La figure 1, une représentation de l'état de l'art d'un mécanisme de transmission de données du Bord vers le Sol,
- La figure 2, une représentation de l'état de l'art d'un mécanisme de transmission de données du Sol vers le Bord,
- La figure 3, un exemple d'architecture permettant de mettre en œuvre le procédé selon la présente demande de brevet,
- La figure 4, un exemple de transcodage transparent,
- La figure 5A un exemple d'étapes mises en œuvre pour la suppression des vocodeurs Haut débit et le recadencement des paquets voix sur IP et la figure 5B, un exemple d'étapes mises en œuvre pour le transcodage des paquets voix sur IP,
- La figure 6, une illustration de la succession des étapes pour l'établissement d'un appel VoIP Outbound, et
- La figure 7, une illustration de la succession des étapes pour l'établissement d'un appel VoIP Inbound.

Afin de mieux faire comprendre l'architecture selon l'invention, la description qui suit est basée sur l'utilisation du protocole standard SIP. Les mécanismes mis en œuvre sont donc transparents pour tout terminal compatible du protocole. L'architecture selon l'invention utilise notamment des mécanismes de terminaux virtuels implémentés dans une application qui utilise les services du serveur SIP.

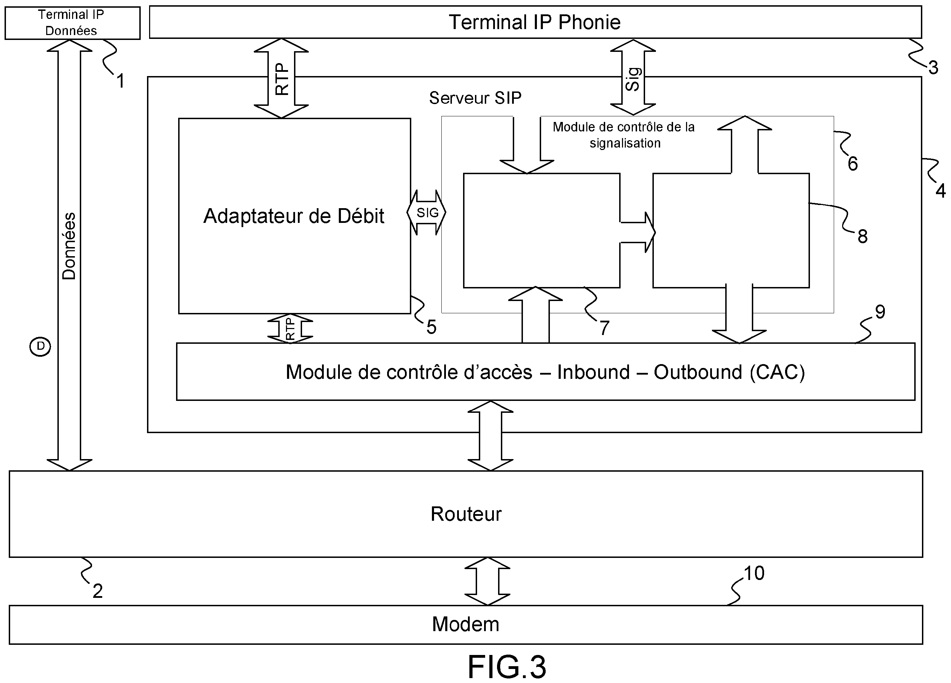

La figure 3 représente un exemple d'architecture du système selon l'invention, comprenant un terminal de données IP 1, qui transmet des données D à un module de routage ou routeur 2, et un terminal de phonie 3 qui communique en parallèle avec un serveur SIP 4 pour la signalisation et le flux RTP. Une telle architecture peut être disposée aussi bien dans des équipements dits « à Bord » d'un véhicule, navire ou d'un aéronef, que dans des équipements ou station sol.

Le serveur SIP 4 comporte un module 5 adaptateur de débit qui, contrôle, transcode, adapte et recadence le débit du protocole RTP, un module de contrôle de la signalisation 6, comprenant lui-même un module 7 d'interception de la signalisation et un module 8 de modification de la signalisation.

Le module 7 d'interception de la signalisation reçoit des informations de la part du terminal IP mais aussi du module de contrôle d'accès 9.

Le module de modification de la signalisation va transmettre les signalisations modifiées d'une part au terminal IP, d'autre part au module 9 de contrôle d'accès et au module 5 adaptateur de débit.

Le routeur 2 échange des données avec le module 9 de contrôle d'accès et avec le Modem Satcom 10 ou tout autre modem mis en œuvre pour une communication entre une station Sol et un aéronef ou satellite quelconque

Le terminal IP sur cette figure représente par exemple le terminal de téléphonie bord, T₁ sur la figure 1.

Le module de routage 2 a notamment pour fonction de router différents flux de données sur les bonnes ressources Satcom, c'est-à-dire le ou les PDP contexte primaires contenant les PDP secondaires associés aux règles TFT en appliquant les règles TFT.

Le module 6 de contrôle de la signalisation, SIG, est une fonction qui analyse la signalisation SIP présente dans un paquet de données ou dans un flux de données, afin de contrôler et modifier les numéros de port RTP et les codeurs-décodeurs ou codec mis en œuvre par les terminaux T₁, T₂. Il pilote le module 5 adaptateur de débit. Les codecs ne sont pas représentés sur les figures pour des raisons de simplification.

L'architecture décrite en figure 3 s'applique aussi bien pour des segments sol que pour des segments Bord. On utilisera les références ' pour différencier les éléments du segment Bord par rapport au segment sol.

Les règles de gestion des ressources Satcom imposent que, du point de vue du module de routage, les ports RTP utilisés par les communications téléphoniques correspondent aux règles TFT.

La gestion automatique du trafic présente plusieurs problématiques :
- L'application de la règle TFT doit être faite sur la connaissance des ports avant l'établissement de la communication entre deux terminaux.
- La connaissance des ports n'est possible qu'à l'établissement de la communication.
- L'affectation des ports est dynamique.

Les modules de contrôle de la signalisation 6 et d'adaptation du débit 5 permettent d'effectuer une translation de port pour les messages d'appel (INVITE) et d'acceptation d'appel (200 OK) les traversant. Ceci permet de masquer la combinatoire des numéros de port des différents combinés SIP utilisés dans le réseau et de n'utiliser qu'un faible nombre de ports RTP (un numéro de port par communications voix Outbound et Inbound).

Concrètement, le module de contrôle de signalisation 6 analyse la signalisation pour une communication donnée, ou flux de données à transmettre, pour connaître le numéro de port RTP annoncé dans le paquet d'appel (INVITE) du terminal émetteur T₁ et par le terminal récepteur T₂ lors de la réponse (200 OK). Ce numéro est propre à chaque terminal et n'est pas configurable.

Pour remédier à ce problème technique, l'architecture selon l'invention utilise des mécanismes de terminaux virtuels implémentés dans une application qui utilise les services du serveur IP. C'est par l'intermédiaire de ces terminaux virtuels qu'il va y avoir possibilité d'adapter une allocation dynamique et non contrôlée aux règles statiques des TFT.

Sur réception d'un appel, le serveur SIP (bord ou sol selon le sens de l'appel) fournit un N° de port RTP libre (défini par configuration), puis ouvre le paquet d'appel et remplace le numéro de port demandé par le terminal T₁ par celui qui vient d'être affecté. Le paquet d'appel est ensuite émis vers la route externe avec un nouveau numéro de port.

### Adaptation de la Bande consommée

Dans le protocole SIP, les terminaux peuvent négocier entre eux le meilleur codec possible.

Dans l'exemple donné, le vocodeur choisi est le G729, de façon à être sûr qu'une communication passe dans un canal streaming de 32Kbits/s.

Le module de contrôle de la signalisation a aussi pour rôle de retirer du message d'appel les vocodeurs à haut débit. Soit dans le cadre de l'exemple, supérieur à 32 Kbits/s (IP+UDP+RTP+payload)

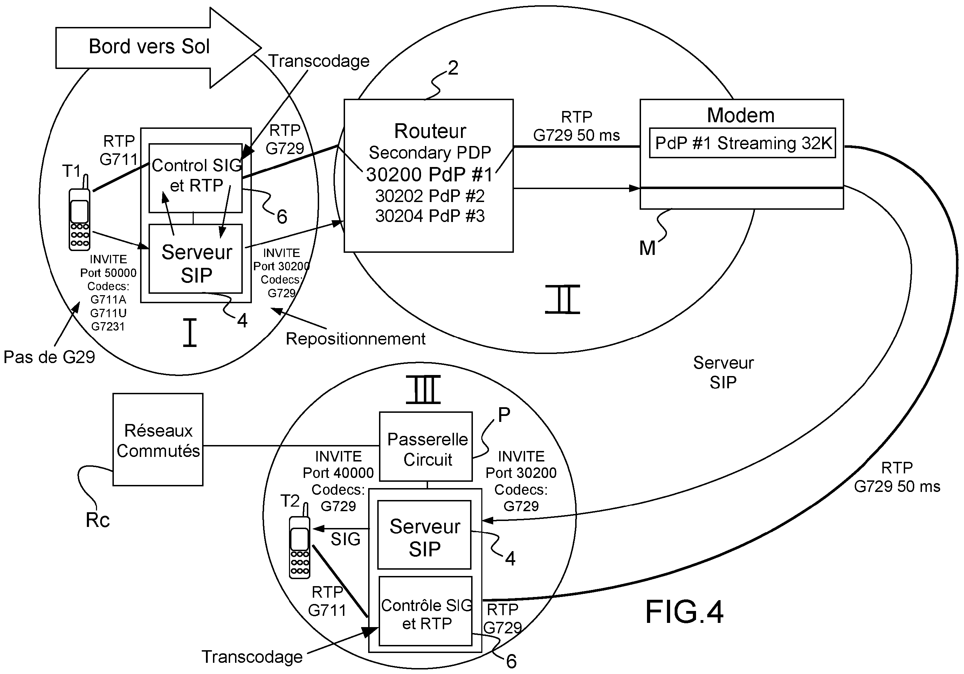

De fait, comme il est illustré à la figure 4 représentant une communication d'une station embarquée vers une station sol, un codec bas débit sera choisi s'il est présent dans l'équipement sol et dans l'équipement embarqué.

Dans le cas où un codec bas débit est présent de bout en bout dans le système de communication, si un message « INVITE » au départ d'une route externe (signal émis par le terminal T₁) possède un vocodeur bas débit, alors le procédé n'aura pas à transcoder ou modifier de manière plus général le flux de données.

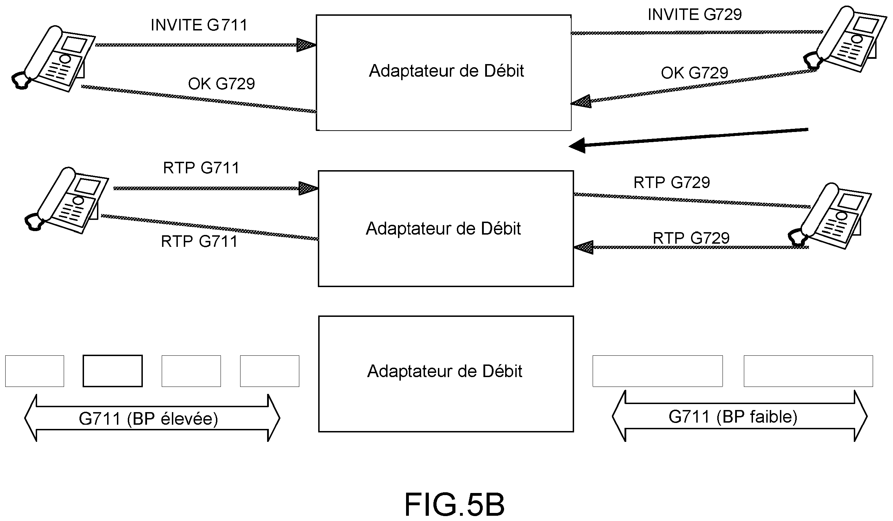

Dans le cas où un codec bas débit n'est pas présent dans les équipements, l'architecture selon l'invention vont utiliser le codec G711 64kbits/s présent dans tous les terminaux, et faire un transcodage vers un codec bas débit. C'est le module 5 adaptateur de débit qui a en charge ce transcodage comme il est illustré à la figure 5B.

Les étapes mises en œuvre par le procédé dans ce cas sont par exemple les suivantes : dans le cas où l'architecture système au niveau du sol et au niveau du bord ne dispose pas de vocodeur bas débit,

Si un message « INVITE » au départ d'une route externe ne possède pas de vocodeur bas débit,

### Appel outbound (figures 3 et 4)

Le serveur SIP bord 4 accepte les appels en G711 par exemple et les transpose en G729. C'est le module 5 Adaptateur de débit qui a en charge ce transcodage.

Le serveur SIP sol effectue une opération inverse en acceptant les appels en G729 via le module de contrôle de signalisation et de RTP et les transcode en G711 vers le terminal demandé T₂. Le flux de communication transcodée est ensuite transmise par la passerelle circuit P, puis par des réseaux commutés Rc.

### Appel inbound

Le serveur SIP sol accepte les appels en G711 et les transcode en G729. Le transcodage est effectué gràce au module adaptateur de débit situé dans l'équipement Sol.

Le serveur SIP bord accepte les appels en G729 et les transcode en G711 vers le terminal demandé. Le transcodage est effectué grâce au module adaptateur de débit situé dans l'équipement Bord.

### Module Adaptateur de débit, 5

Le rôle de ce module adaptateur de débit est d'être placé en coupure sur les flux RTP pour recadencer les flux et effectuer un transcodage si nécessaire. Ceci signifie que le module est situé entre les deux terminaux T₁ et T₂ de l'exemple donné.

Le fait de recadencer les flux permet notamment d'obtenir une excellente qualité voix pour une bande passante minimale réelle inférieure à 32 kbits par seconde.

Ce module adaptateur de débit 5, comme il a été décrit précédemment, a aussi en charge de transcoder les paquets émis en codec haut débit par les terminaux en paquet voix bas débit pour émission sur une connexion satellite (réseau local et réseau sol).

L'adaptateur de débit est une fonction logicielle intelligente portée par le serveur SIP.

L'adaptateur de débit permet de réduire le débit VoIP de manière intelligente afin de permettre l'usage de liens bas débit en optimisant :
- Le débit maximal sur les liens utilisés
- La qualité de voix
- Le CPU utilisé pour les opérations

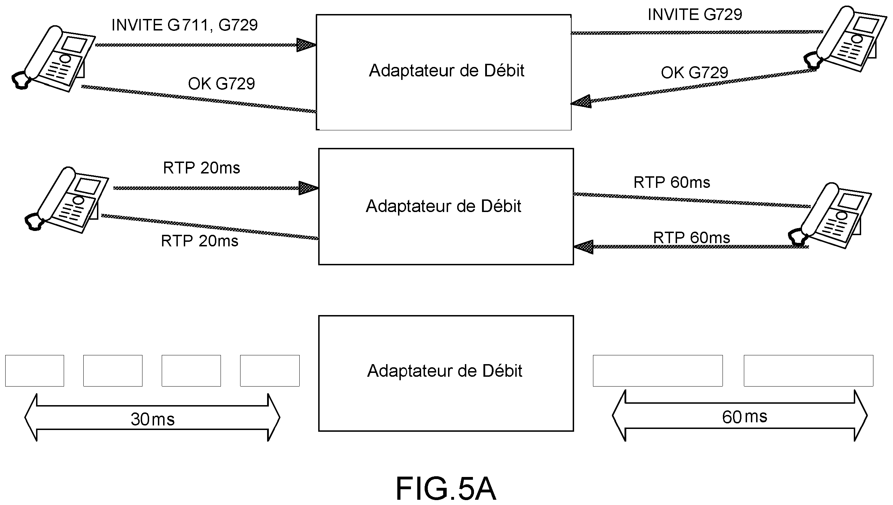

L'adaptateur de débit travaille en deux étapes schématisées aux figures 5A, 5B :
1. dès la demande d'appel émise par un terminal en repérant les codecs demandés par les terminaux, en en proposant ou en supprimant certains,
2. dès l'établissement des flux média réels reçus par les terminaux

Il est aussi conçu pour travailler dans les deux sens de communication Bord-Sol et Sol-Bord.

Ces deux étapes permettent enfin de travailler suivant deux modes :
1. Le recadencement de paquets voix adapté aux faibles et moyennes demandes de compressions schématisé à la figure 5A. Sur cet exemple, on voit que la trame de paquets voix sur IP est recadencé de 30ms à 60ms.
2. Le transcodage de paquets adapté aux fortes demandes de compression schématisé à la figure 5B, par exemple en passage d'un débit de codage de type G711, codage à débit élevé à un codage à débit faible de type G729. Il est bien entendu que les types de codage G711 et G729 sont donnés uniquement à titre illustratif et nullement limitatifs.

Le travail sur la signalisation porte sur le forçage, si possible, des terminaux à utiliser le même codec bas débit (<=32 kbits typiquement).

Dans le cas où un des terminaux ne peut supporter un tel codec, cela est détecté dans cette première phase et le transcodage va s'appliquer.

### Appel outbound

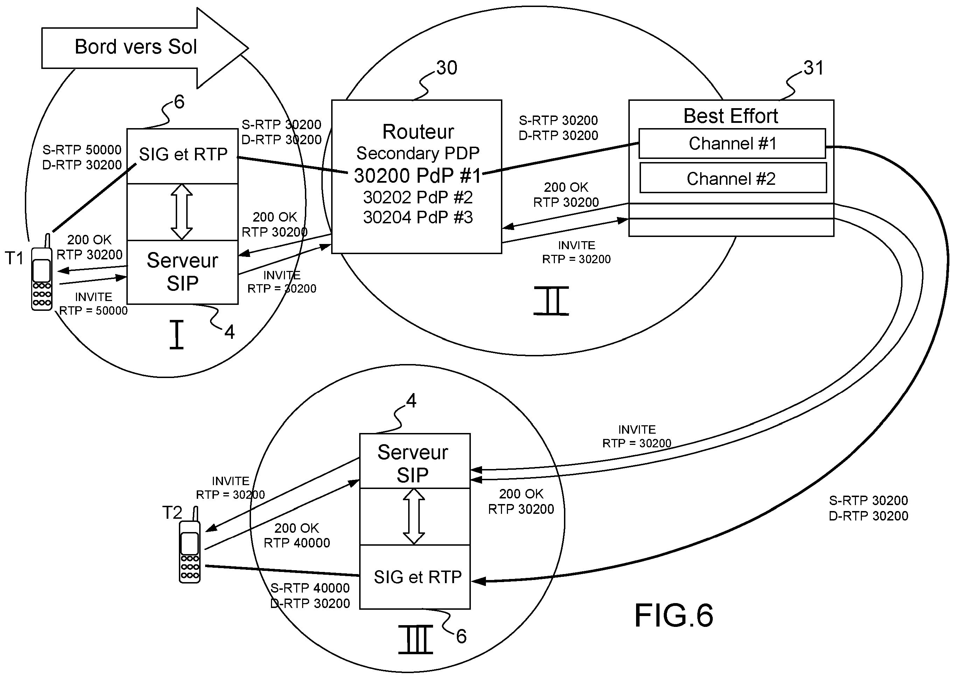

La figure 6 schématise l'établissement d'un appel VoIP Outbound sur un segment de bout en bout. Sont présentés, en particulier, les traitements liés à l'échange par les deux téléphones ou terminaux appelant, T₁ dans cet exemple, et appelé T₂, des messages initiaux « INVITE » et « 200 OK ».

Que l'appel soit identifié en Outbound ou Inbound, c'est aux serveurs SIP de se substituer aux terminaux T₁, T₂ et de les leurrer afin de pouvoir modifier leurs ports RTP.

Un exemple de chronologie des étapes mises en œuvre dans le cas d'un appel outbound, est donné ci-après.

### BORD

Ex : le terminal émetteur T₁ présente l'appel au serveur SIP Bord avec :
Port RTP 50000
Le serveur SIP Bord capture le message d'INVITE.
L'appel est pour une route externe
Vérification par le module de contrôle d'accès du nombre d'appels Inbound et Outbound sur cette route
Vérification de la présence du vocodeur bas débit (ex ; G729) dans le message d'INVITE
Le serveur SIP émet un message «200 trying » vers le terminal demandeur de l'appel T₁
Le serveur Bord SIP demande un numéro de port RTP externe
Le premier N° de port externe libre est attribué
Le serveur Bord SIP poursuit l'appel vers le routeur
L'appel est poursuivi dans le « best effort », 30, 31, c'est-à-dire que l'appel est transmis vers les équipements SOL en utilisant le mode « best effort » 31 via un module de routage 30.

### SOL

Le serveur sol 4' SIP reçoit un message d'INVITE sur sa route externe (Trunk de liaison entre le serveur SIP Bord et le serveur SIP Sol)

Marquage d'un appel sur cette route en Inbound, marquage de l'appel qui est effectué par le module de contrôle d'accès

Poursuite de l'appel par récupération de l'adresse IP issue du numéro d'appel et contenue dans la base d'enregistrement (REGISTRAR) des terminaux connectés au serveur SIP du Sol vers le terminal demandé T₂

Le terminal demandé répond par un 200 OK avec le port qu'il souhaite utiliser pour le RTP (40000)

Le serveur sol SIP capture le message d'acceptation d'appel (200 OK)

Le serveur SIP sol demande un numéro de port RTP externe

Le premier port externe libre est attribué (30200) ; le serveur sol poursuit l'appel vers le routeur du SOL.

### BORD

Le serveur bord SIP reçoit le 200 OK et poursuit l'appel vers le terminal T₁ sans modification du message de confirmation (200 OK)

Le terminal demandeur T₁ émet les trames RTP avec comme port source 50000 et comme port destination 30200.

Le module 5 adaptateur de débit est en coupure, c'est-à-dire entre les terminaux T₁ et T₂,

Réception des trames et modification du port source en 30200

Les trames sont envoyées au module de routage selon l'invention avec comme port source 30200 et destination 30200

Le trafic montant et descendant est maintenant affecté sur un port RTP maîtrisé et connu dans les règles TFT. Le trafic est maintenant affecté automatiquement à un canal streaming par une correspondance parfaite avec les règles TFT.

### Appel Inbound

Pour éviter l'affectation d'un port Sol et Bord identique, le procédé permet de les affecter automatiquement et par configuration de façon décroissante Bord vers Sol et de façon croissante de Sol vers Bord.

Une plage de port est définie (par configuration) dans le serveur SIP du Bord et dans celui du Sol. Cette plage commence par ex :
- Port 30200 à 30250 avec une affectation de **30200** vers 30250 depuis le Bord
- Port 30200 à 30250 avec une affectation de **30250** vers 30200 depuis le Sol

Si un appel est initialisé depuis le Bord, le serveur SIP du Bord affecte le port 30200 s'il est libre dans le paquet d'appel.

Si un appel est initialisé depuis le Sol, le serveur SIP du Sol affecte le port 30250 s'il est libre dans le paquet d'appel.

Cette mécanique d'affectation croissante (depuis le Bord) et décroissante (depuis le Sol) et répétitive jusqu'à l'occupation de tous les ports.

Un port libéré (Raccroché de la communication) et ré-affecté si une autre communication s'initialise.

L'invention est transparente pour les appels en provenance du SOL. Ceux-ci sont effectués dans le mode Best Effort (pour la signalisation) avec changement des ports au SOL pour vérifier ou respecter les règles TFT de l'aéronef ou de l'avion.

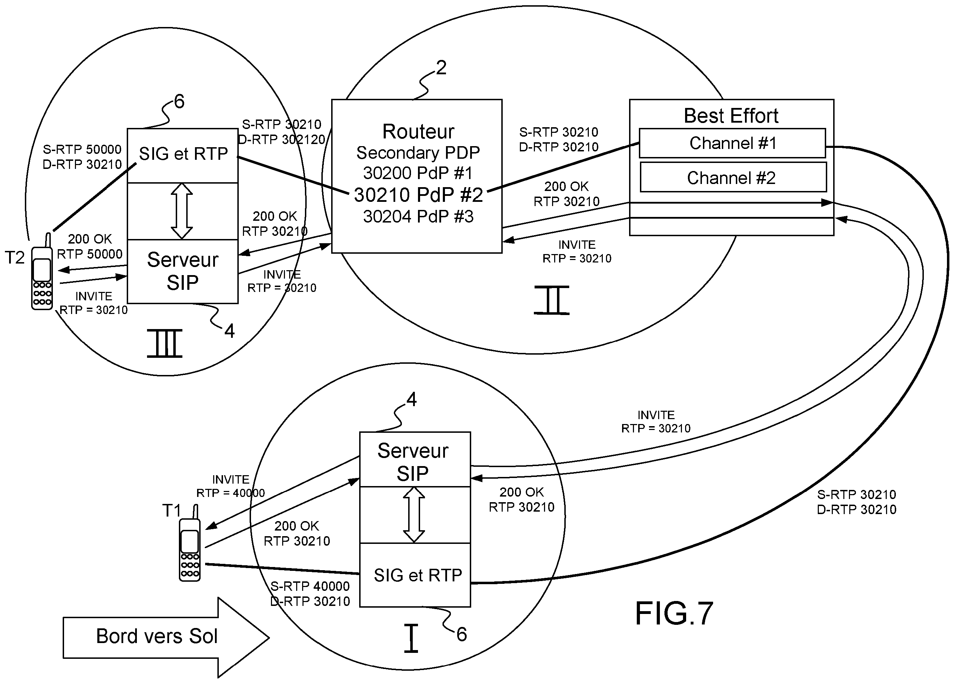

La chronologie des étapes peut être la suivante, selon la figure 7 :

### SOL

Le terminal demandeur T₁,émet un appel avec comme numéro de port RTP 40000
Port RTP 40000
Codec G711A, G711U, G729, G723.1

Le serveur sol SIP 4 capture le message d'INVITE
L'appel est pour une route externe
Vérification du nombe d'appels Inbound et Outbound sur cette route par le module de contrôle d'accès,
Si Un appel est possible, marquage d'un appel en Outbound
Vérification de la présence du vocodeur bas débit (ex ; G729) dans le message d'INVITE
Le serveur sol SIP émet un « trying » vers le terminal T₁ demandeur de l'appel

Le serveur sol SIP demande un numéro de port RTP externe
Le premier port externe libre est attribué (30210)

Le serveur sol SIP poursuit l'appel
L'appel est poursuivi dans le Best Effort

### BORD

Le serveur Bord SIP 4' reçoit un message d'invite sur sa route externe
Marquage d'un appel sur cette route en Inbound
Poursuite de l'appel vers le terminal demandé

Le terminal T₂ demandé répond par un 200 OK avec le port qu'il souhaite utiliser pour le RTP (50000)
Le serveur Bord SIP 4' capture le message d'INVITE
Le serveur bord SIP 4' modifie le port RTP en 30210.

### SOL

Sur réception du 200 OK, le terminal T₁ émet les trames RTP vers le destinataire T2 dans le Best effort.

### BORD

Sur réception des trames en 30210, le module de routage situé dans le système Bord affecte l'appel automatiquement à un canal streaming défini.

L'architecture système selon l'invention permet donc :
De générer la signalisation dans le mode Best Effort,
De générer la voix dans le streaming,

D'ouvrir un canal streaming optimisé pour chaque communication de façon automatique pour un appel qui sort du système plus connu sous l'abréviation anglo-saxonne « outbound » ou un appel qui rentre dans le système ou « In-Bound ».

De forcer les terminaux à négocier en G729 (codage de la parole à 8 kbit/s par prédiction linéaire avec excitation par séquences codées à structure algébrique conjuguée) ou un autre codec de bas débit si ce vocodeur est présent

De transcoder en bas débit si le vocodeur n'est pas présent dans les terminaux,

D'optimiser le cadencement des trames voix,

De garantir que le nombre de communications (entrante et sortante) autorisées par la Bande passante ne sera pas dépassé.

La compatibilité avec le standard SIP.

Ils offrent aussi la possibilité de s'adapter à des contraintes fortes en bande passante. La contrainte est de garantir qu'une communication passera toujours dans un canal de taille le plus petit possible, cette taille étant fixe quels que soient les terminaux utilisés.

## Revendications

1. - Architecture système configurée pour permettre d'ouvrir de manière dynamique des canaux de communication de dimension optimisée à débit garanti, le protocole de communication utilisé étant le protocole RTP, ladite architecture système étant destinée à être positionnée dans un aéronef, une valise et/ou un navire, et/ou une station sol comprenant un ou plusieurs terminaux Ti voix sur IP, ladite architecture comprenant au moins les éléments suivants :
• Un système de communication satellitaire de type BGAN, SwiftBroadband ou FleetBroadband , un terminal de données IP (1) configuré pour transmettre des données à un routeur (2) compris dans l'architecture et un terminal IP phonie (3) configuré pour communiquer en parallèle avec un serveur SIP (4) pour la signalisation et le flux RTP,
• Ledit serveur SIP(4) sol ou bord comprenant au moins les éléments suivants :
* Un module adaptateur de débit (5) situé entre au moins un terminal émetteur T₁ et un terminal récepteur T₂, ledit module adaptateur de débit (5) étant une fonction logicielle portée par le serveur SIP configurée pour contrôler, cadencer et adapter le débit d'un flux RTP reçu par un terminal,
* Un module de contrôle (6) de la signalisation SIP présente dans les flux de données afin de contrôler et modifier les numéros de port RTP et les codeurs-décodeurs mis en œuvre par les terminaux de données, T₁, T₂, ledit module de contrôle (6) comportant un module (7) d'interception de signalisation et un module (8) de modification de la signalisation, ledit module d'interception de signalisation étant configuré pour recevoir les informations de la part d'un terminal émetteur des données et d'un module de contrôle d'accès (9),
• Le module adaptateur de débit étant un module configuré pour permettre une adaptation d'un codec bas débit G729 vers le codec G711 et vice et versa.

2. - Architecture selon la revendication 1 **caractérisée en ce que** le terminal de données IP (1) est un terminal voix sur IP configuré pour transmettre des données D en parallèle à des données phonie au routeur qui est configuré pour communiquer avec le terminal IP phonie.

## Patentansprüche

1. Systemarchitektur, welche konfiguriert ist, um dynamisch Kommunikationskanäle mit optimierter Dimension und mit garantierter Übertragungsrate zu öffnen, wobei das verwendete Kommunikationsprotokoll das RTP-Protokoll ist, wobei die Systemarchitektur dazu bestimmt ist, in einem Luftfahrzeug, einem Koffer und/oder einem Schiff und/oder einer Bodenstation positioniert zu werden, welche einen oder mehrere Voice-over-IP-Endgeräte Ti umfassen, wobei die Architektur mindestens folgende Elemente umfasst:
• ein Satellitenkommunikationssystem vom Typ BGAN, SwiftBroadband oder FleetBroadband, ein IP-Daten-Endgerät (1), welches konfiguriert ist, um Daten an einen Router (2) zu übertragen, welcher in der Architektur umfasst ist, und ein IP-Telefonie-Endgerät (3), welches konfiguriert ist, um parallel mit einem SIP-Server (4) in Bezug auf Signalisierung und RTP-Strom zu kommunizieren,
• wobei der Boden- oder Bord-SIP-Server (4) mindestens folgende Elemente umfasst:
∗ ein Ratenanpassungsmodul (5), welches zwischen mindestens einem Sender-Endgerät T₁ und einem Empfänger-Endgerät T₂ befindlich ist, wobei das Ratenanpassungsmodul (5) eine durch den SIP-Server getragene Softwarefunktion ist, welche zum Steuern, Takten und Anpassen der Rate eines von einem Endgerät empfangenen RTP-Stroms konfiguriert ist,
∗ ein Steuerungsmodul (6) der in den Datenströmen vorhandenen SIP-Signalisierung, um die Nummern der RTP-Ports und die durch die Daten-Endgeräte, T₁, T₂, implementierten Codierer-Decodierer zu steuern und zu ändern, wobei das Steuerungsmodul (6) ein Signalisierungs-Abfangmodul (7) und ein Signalisierungs-Änderungsmodul (8) umfasst, wobei das Signalisierungs-Abfangmodul konfiguriert ist, um die Informationen von einem Sender-Endgerät der Daten und von einem Zugangskontrollmodul (9) zu empfangen,
• wobei das Ratenanpassungsmodul ein Modul ist, welches konfiguriert ist, um die Anpassung eines Codecs mit niedriger Rate G.729 an den Codec G.711 und umgekehrt zu ermöglichen.

2. Architektur nach Anspruch 1, **dadurch gekennzeichnet, dass** das IP-Daten-Endgerät (1) ein Voice-over-IP-Endgerät ist, welches konfiguriert ist, um Daten D parallel zu Telefoniedaten an den Router zu übertragen, welcher konfiguriert ist, um mit dem IP-Telefonie-Endgerät zu kommunizieren.

## Claims

1. A system architecture configured to dynamically open communication channels of optimised dimension with guaranteed bit rate, the communication protocol used being the RTP protocol, said system architecture being intended to be positioned in an aircraft, a suitcase and/or a ship, and/or a ground station comprising one or more voice-over-IP terminals Ti, said architecture comprising at least the following elements:
• a satellite communication system of BGAN, SwiftBroadband or FleetBroadband type, an IP data terminal (1) configured to transmit data to a router (2) comprised in the architecture and an IP voice terminal (3) configured to communicate in parallel with a SIP server (4) for the signalling and the RTP stream,
• said ground or on-board SIP (4) server comprising at least the following elements:
∗ a rate adapter module (5) located between at least one sender terminal T₁ and a receiver terminal T₂, said rate adapter module (5) being a software function carried by the SIP server configured to control, clock and adapt the rate of an RTP stream received by a terminal,
∗ a control module (6) of SIP signalling present in the data stream in order to control and modify the RTP port numbers and the coder-decoders implemented by the data terminals, T₁, T₂, said control module (6) comprising a signalling interception module (7) and a signalling modification module (8), said signalling interception module being configured to receive the information from a data transmitting terminal and an access control module (9),
• the rate adapter module being a module configured to allow adaptation of a G.729 low bit rate codec to the G.711 codec and vice versa.

2. The architecture according to claim 1 **characterised in that** the IP data terminal (1) is a voice over IP terminal configured to transmit data D in parallel to voice data to the router which is configured to communicate with the IP voice terminal.
